# FASCICULE DE BREVET EUROPEEN

(11) **EP 0 463 980 B1**
(45) Date de publication et mention de la délivrance du brevet: **14.09.1994**
(21) Numéro de dépôt: 91430018.1
(22) Date de dépôt: 26.06.1991
(51) Int. Cl.: B60P 3/20

(54) **Carrosserie isotherme de véhicule frigorifique et son procédé de fabrication**
Thermisch isolierender Aufbau eines Kühlfahrzeuges und Verfahren zu seiner Herstellung
Thermal insulating structure of a refrigerator vehicle and procedure for its manufacture

(30) Priorité: 27.06.1990 FR 9008431
(43) Date de publication de la demande: 02.01.1992
(73) Titulaire: CARROSSERIE LAMBERT, 13420 Gemenos (FR)
(72) Inventeur: Lambert, Georges, F-13420 Gemenos (FR)
(74) Mandataire: Moretti, René

(56) Documents cités:
- FR-A- 2 295 825
- FR-A- 2 372 339
- FR-A- 2 521 689

## Description

La présente invention a pour objet une carrosserie isotherme de véhicule frigorifique et son procédé de fabrication.

Le secteur technique de l'invention est celui de la fabrication des cellules isothermes destinées à être montées sur le châssis d'un véhicule utilitaire ou d'une remorque frigorifiques.

Les véhicules frigorifiques comportent à l'arrière de la cabine de conduite une enceinte isotherme comprenant une ou plusieurs portes étanches pour le transport de denrées périssables telles que par exemple des produits alimentaires surgelés ou autres. Un groupe frigorifique est installé à l'intérieur ou à l'extérieur de ladite enceinte par exemple dans un carter généralement isotherme installé au-dessus de la cabine de conduite.

De façon connue, de telles enceintes comportent, intégrées dans les parois latérales et de pavillon, des armatures en bois ou autres auxquelles sont fixés des moyens d'accrochage des produits transportés, tel est par exemple le cas des véhicules de transport de viande ou les quartiers sont pendus à des crochets engagés dans des anneaux ancrés dans lesdites armatures. Un platelage en bois recouvre généralement la paroi de plancher de ces enceintes ou est intégré dans celle-ci.

L'objectif de la présente invention est de réaliser selon une nouvelle conception, de telles enceintes ou cellules dans le but d'en simplifier la réalisation en plusieurs parties de carrosserie identiques permettant l'usage des mêmes moules afin d'obtenir des cellules de qualité à un prix de revient compétitif en regard des cellules similaires proposées sur le marché.

Cet objectif est atteint par la carrosserie isotherme selon l'invention destinée à équiper un véhicule utilitaire ou une remorque frigorifiques, laquelle carrosserie comprenant une paroi de pavillon, une paroi de plancher, une paroi avant, une paroi arrière et deux parois latérales, lesquelles parois sont rectangulaires pour constituer ensemble une cellule parallèlépipédique dont la paroi arrière et/ou au moins une desdites parois latérales comportent une ouverture de porte (une telle carrosserie étant représentée par exemple par FR-A-2 372 339) caractérisée en ce que ladite paroi de pavillon, de plancher, avant et arrière comportent le long de leurs bords longitudinaux et d'un de leurs bords transversaux une gorge continue orientée à angle droit vers l'intérieur de la cellule et pour chacune de ces parois, sont encastrés dans cette gorge le bord transversal exempt de gorge de la paroi adjacente et un des bords desdites parois latérales.

Selon l'invention, les parois de pavillon et de plancher sont symétriques par rapport à un axe xx₁ perpendiculaire auxdites parois et passant par le centre de la cellule. De même les parois avant et arrière sont symétriques par rapport à un axe yy₁ perpendiculaire auxdites parois et passant par le centre de ladite cellule.

Selon un mode de réalisation préférentiel, lesdites gorges sont d'une section droite rectangulaire et comportent chacune deux lèvres de recouvrement formant des couvre-joints, lesquelles lèvres sont parallèles entre elles et perpendiculaires à la paroi qui les porte.

La gorge de chacune desdites parois s'étend parallèlement à ses bords longitudinaux et transversal. La lèvre externe de cette gorge prolonge la face externe du bord de la paroi.

Le bord des parois exempt de gorge est sensiblement au contact du fond de la gorge et lesdites lèvres encadrent étroitement ledit bord, la liaison des parois entre elles étant réalisé par polymérisation d'une résine synthétique insérée entre la gorge et la partie des parois encastrées dans celle-ci.

Pour la mise en oeuvre de telles cellules isothermes, on applique le procédé de fabrication ci-après lequel se caractérise par les opérations suivantes :
- on réalise par moulage les parois de pavillon et de plancher identiques, on procède de même pour les parois avant et arrière ;
- on réalise les deux parois latérales de la cellule ;
- on prévoit avant le moulage des réservations dans les moules afin d'obtenir notamment dans la paroi arrière une ouverture de porte;
- on assemble ensuite lesdites parois pour former une cellule parallélépipédique et en cours d'assemblage ;
- on dispose les parois de pavillon et de plancher de façon symétrique par rapport audit axe xx₁ de telle sorte que les bords exempts de gorge desdites parois soient en opposition, et on procède de même pour les parois avant et arrière par rapport audit axe yy₁ ;
- on présente les parois latérales de telle sorte que leurs bords périphériques soient en regard des gorges desdites parois dont les bords exempts de gorge sont mis en regard des gorges des parois adjacentes et on assemble lesdites parois par encastrement de leurs bords dans lesdites gorges et on les solidarise par polymérisation d'une résine synthétique dans le but d'obtenir une cellule monobloc.

Le résultat de l'invention consiste en une carrosserie isotherme monobloc bien que mise en oeuvre par l'assemblage de plusieurs éléments.

Les avantages se situent d'une part au niveau de la structure d'une telle carrosserie par la qualité des assemblages des éléments entre eux, d'autre part au mode de réalisation desdits éléments lesquels sont, à l'exception des parois latérales exemptes de gorges, qui sont réalisées à partir de plaques isothermes du commerce, obtenus par moulage dans des moules réalisant des pièces identiques deux à deux pour la mise en oeuvre des parois de pavillon et de plancher, et des parois avant et arrière.
Selon ce concept, un moule dont la longueur et la largeur est adaptable en fonction des dimensions des cellules à obtenir pourrait être suffisant. Bien entendu pour la réalisation de séries de carrosseries, plusieurs moules à largeur et longueur déterminées peuvent être utilisés afin d'accroître le rythme de production.

L'encastrement dans lesdites gorges des bords des éléments adjacents et leur assemblage par polymérisation d'une résine synthétique telle qu'une résine polyester, garantit à la fois une excellente qualité de construction et d'isolation thermique, les éléments étant parfaitement soudés les uns aux autres pour former une cellule monobloc.

D'autres avantages et les caractéristiques de l'invention ressortiront encore de la description suivante donnée à titre d'exemple en référence au dessin annexé sur lequel :

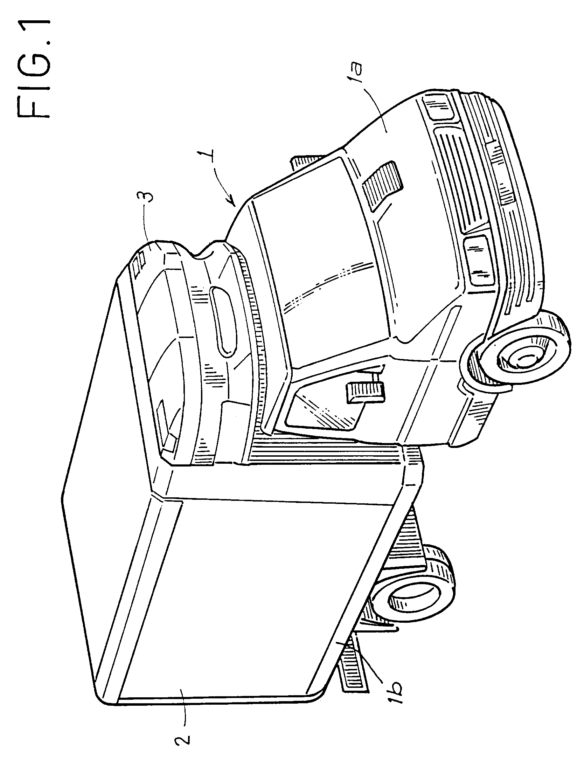

- la figure 1 est une vue en perspective d'un véhicule utilitaire équipé d'une carrosserie isotherme selon l'invention ;
- la figure 2 est une vue "éclatée" en perspective de la carrosserie représentée montée sur le véhicule de la figure 1 ;
- la figure 3 est une vue en coupe longitudinale de cette carrosserie ;
- la figure 4 en est une coupe transversale ;
- la figure 5 en est une coupe horizontale ;
- la figure 6 est une vue en coupe donnant le détail de l'assemblage par encastrement d'une paroi latérale dans la gorge de la paroi de pavillon ;
- la figure 7 est une vue en perspective partielle "éclatée" d'un angle bas de la carrosserie.
On se reporte d'abord à la figure 1 du dessin qui représente un véhicule frigorifique 1 comprenant une cabine de conduite la et à l'arrière de celle-ci, un châssis 1b sur lequel est montée une carrosserie isotherme ou cellule 2.
Cette cellule comporte à sa partie supérieure et à l'avant, un carter 3 dans lequel est placé le groupe frigorifique, lequel est ainsi situé au-dessus de la cabine de conduite 1a.

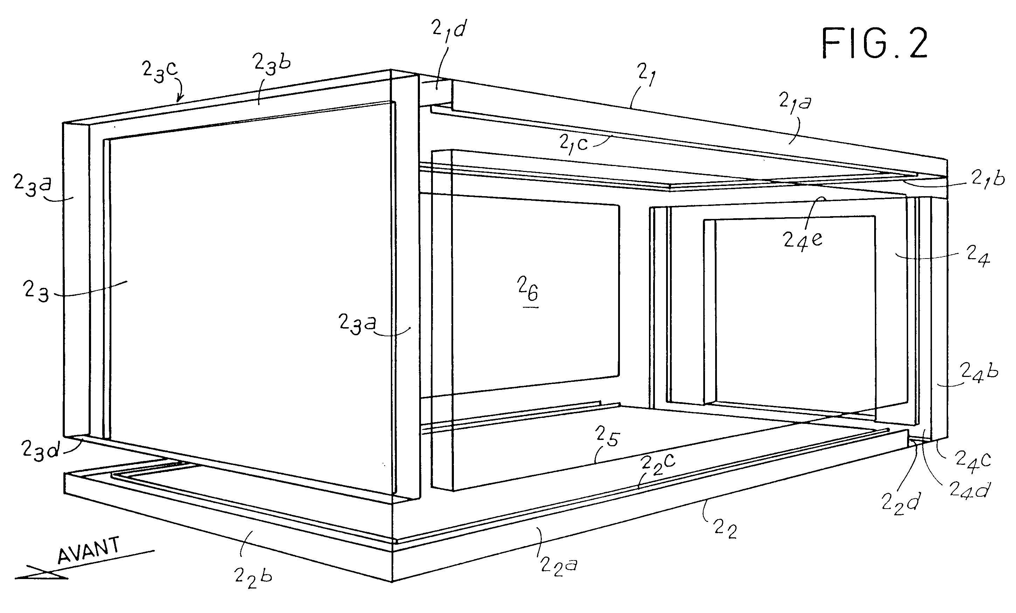

Ladite carrosserie 2 (figure 2) est constituée par des parois rectangulaires reliées entre elles pour adopter la forme générale d'un parallélépipède. Elle se compose d'une paroi de pavillon 2₁, d'une paroi de plancher 2₂, d'une paroi avant 2₃ et d'une paroi arrière 2₄ laquelle comporte une ouverture 2₄a rectangulaire destinée à recevoir une porte (non représentée) d'accès à la cellule 2 et deux parois latérales 2₅, 2₆.

Lesdites parois de pavillon 2₁, de plancher 2₂, avant 2₃ et arrière 2₄ comportent le long de leurs bords longitudinaux 2₁ₐ,2₂a, 2₃a , 2₄b et d'un de leurs bords transversaux 2₁b, 2₂b, 2₃b , 2₄c une gorge continue 2₁c, 2₂c, 2₃c , 2₄d réservée à angle droit par rapport auxdites parois et comportant ainsi deux lèvres formant couvre-joints, perpendiculaires auxdites parois. Ces gorges sont toutes orientées vers l'intérieur de la cellule 2 et sont destinées à recevoir les bords exempts de gorges 2₁d, 2₂d, 2₃d , 2₄e des parois de pavillon, de plancher, avant et arrière et les bords périphériques des parois latérales 2₅, 2₆.

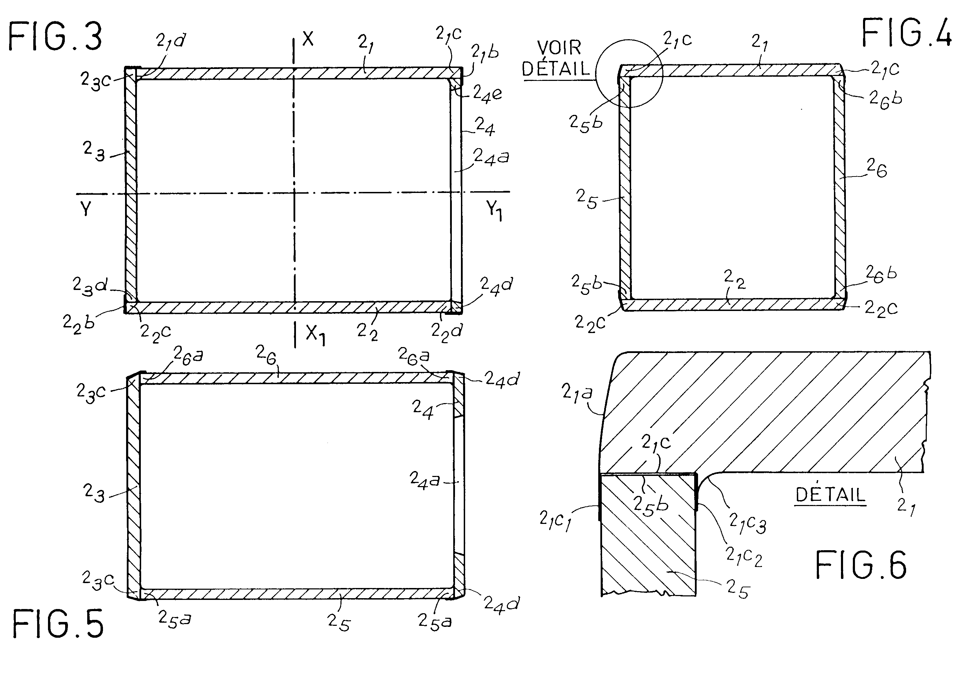

On se reporte à la figure 6 qui représente le détail d'un angle haut de la cellule 2 (figure 4). Cette figure illustre plus particulièrement un bord de rive de la paroi de pavillon 2₁ par exemple le bord 2₁ₐ, lequel comporte la gorge 2_{1c}.

Le bord 2₁ₐ qui pour des raisons esthétiques est profilé, se prolonge vers le bas par une lèvre 2₁c₁ située à l'extérieur de la cellule. Cette lèvre compose ladite gorge, laquelle comporte également une deuxième lèvre 2₁c₂ de moindre longueur raccordée à la face interne de la paroi du pavillon 2₁ par un congé 2₁c₃. La gorge 2₁c est ainsi formée par ces deux lèvres et qui s'étendent perpendiculairement à la paroi de pavillon. La gorge 2₁c est d'une section droite rectangulaire et les lèvres 2₁c₁, 2₁c₂ qui constituent des couvre-joints. sont parallèles entre elles et encadrent étroitement le bord supérieur 2_{5b} de la paroi latérale 2₅, lequel bord 2_{5b} est mis lors de son encastrement, sensiblement au contact du fond de la gorge.

La solidarisation de la paroi de pavillon 2 et de la paroi latérale 2₅ est réalisée par polymérisation d'une résine synthétique par exemple une résine polyester insérée entre les faces internes du fond de gorge et desdites lèvres et les faces externes de la paroi latérale 2₅. La solidarisation des éléments entre eux par polymérisation d'une résine synthétique réagissant sur les molécules des composants synthétiques desdites parois, réalisent la liaison intime desdites parois de pavillon et latérale ce qui garantit une excellente tenue mécanique au droit de l'assemblage desdites parois.

Bien entendu ce mode de fabrication est utilisé pour l'assemblage de tous les éléments qui constituent la cellule 2.

On se reporte maintenant aux figures 3 à 5 qui illustrent le mode d'assemblage des parois de ladite cellule. Ces parois sont réalisées, par application des techniques traditionnelles utilisées pour la fabrication de produits en matériaux plastiques composites par moulage sous vide, par injection ou par pressage...

Selon l'invention, on réalise dans un même moule les parois de pavillon 2₁ et de plancher 2₂ pour obtenir des parois identiques.

On réalise également dans un même moule les parois avant 2₃ et arrière 2₄. De façon connue on place dans les moules et avant le moulage des armatures en bois ou métalliques pour rigidifier les éléments, de telles armatures permettant en outre de fixer à l'intérieur de la cellule des accessoires comme par exemple des organes de suspension pour y accrocher des quartiers de viande ou tous autres accessoires qui équipent couramment les cellules de véhicules frigorifiques.

Selon un mode de réalisation manuelle et/ou par pressage on place dans le moule de la paroi arrière l'encadrement destiné à délimiter la porte de visite de la cellule et à y fixer les gonds d'articulation des panneaux de portes.

Les parois latérales peuvent être mises en oeuvre également par moulage dans les mêmes conditions que les autres parois, toutefois du fait qu'elles se présentent sous la forme simple de panneaux rectangulaires, sans aménagement le long de leurs bords, elles sont de préférence réalisées à partir de plaques de matériaux composites proposés dans le commerce.

Après que les parois aient été fabriquées dans les conditions exposées ci-dessus, on les assemble au moyen d'un outillage traditionnel.

En cours d'assemblage et selon l'invention (figure 3) :
On dispose la paroi de pavillon 2₁ et la paroi de plancher 2₂ de façon symétrique par rapport à un axe xx₁ perpendiculaire auxdites parois et passant par le centre de la cellule, de telle sorte que des bords 2₁d/2₂d exempts de gorge de ces parois soient en opposition et distants d'une même longueur dudit axe. Corrélativement les bords 2₁b/2₂b qui comportent une gorge sont dans la même situation, les gorges 2₁c/2₂c étant chacune disposée en regard l'une de l'autre et à la même distance dudit axe.

On procède de même pour les parois avant 2₃ et arrière 2₄ que l'on dispose de façon symétrique par rapport à un axe yy₁ perpendiculaire auxdites parois et à l'axe xx₁ et passant également par le centre de la cellule.

Comme pour les parois de pavillon et de plancher, les bords exempts de gorge 2₃d, 2₄e sont en opposition et à une même distance de l'axe yy₁. Il en est de même pour les bords 2₃b, 2₄c dont les gorges 2₃c, 2₄d sont en regard l'une de l'autre.

Selon ce mode d'assemblage, des parois de pavillon, de plancher avant et arrière dit "assemblage tournant", le bord 2₁d de la paroi de pavillon est encastré dans la gorge 2₃c de la paroi avant, le bord 2₂d de la paroi de plancher, dans la gorge 2₄d de la paroi arrière, le bord 2₄e de la paroi arrière dans la gorge 2₁c de la paroi de pavillon et le bord 2₃d de la paroi avant dans la gorge 2₂c de la paroi de plancher.

Les figures 4 et 5 illustrent l'assemblage des parois latérales 2₅/2₆ dans les gorges des autres parois. Ainsi les bords 2₅a/2₆a des parois 2₅/2₆ sont encastrés dans les gorges 2₃c de la paroi avant et 2₄d de la paroi arrière, les bords 2₅b/2₆b dans les gorges 2₁c de la paroi de pavillon et 2₂c de la paroi de plancher.

La solidarisation des parois entre elles est réalisée tel que décrit en référence à la figure 6.

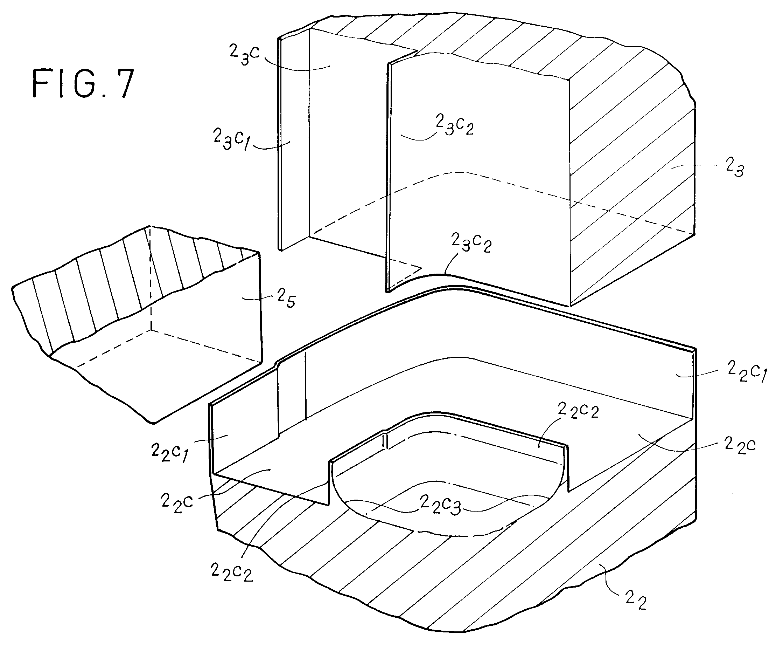

La figure 7 représente les différents éléments dissociés d'un angle bas de la cellule 2, par exemple l'angle bas gauche de la partie avant.

Comme la paroi de pavillon, la gorge 2₂c de la paroi de plancher 2₂ comporte une lèvre externe 2₂c₁ plus longue que la lèvre interne 2₂c₂ laquelle comporte également un congé 2₂c₃ qui rejoint la face interne de la paroi de plancher.

Les gorges 2₃d/2₄d des parois avant et arrière ont des lèvres de même longueur.

La figure 7 représente partiellement l'angle bas gauche de la paroi avant 2₃.

La gorge 2₃c de cette paroi comporte deux lèvres 2₃c₁/2₃c₂ de même longueur dont la lèvre interne est comme les autres lèvres internes des autres parois, raccordée à la face interne par un congé 2₃c₃.

Cette figure représente également l'angle avant bas de la paroi latérale 2₅ laquelle, en position d'assemblage est encastrée à la fois dans la gorge 2₃c de la paroi avant et dans la gorge 2₂c de la paroi de plancher, la solidarisation étant réalisée par polymérisation tel que cela a été décrit en référence à la figure 6.

Bien entendu, sans sortir du cadre de l'invention, les parties qui viennent d'être décrites pourront être remplacées, par l'homme du métier, par des parties équivalentes remplissant la même fonction.

## Revendications

1. Carrosserie isotherme équipant un véhicule utilitaire ou une remorque frigorifiques laquelle carrosserie comprenant une paroi de pavillon (2₁), une paroi de plancher (2₂), une paroi avant (2₃), une paroi arrière (2₄) et deux parois latérales (2₅, 2₆) lesquelles parois sont rectangulaires pour constituer ensemble une cellule parallélépipédique (2) dont la paroi arrière (2₄) et/ou au moins une des parois latérales (2₅, 2₆) comporte une ouverture de porte caractérisée en ce que lesdites parois de pavillon (2₁), de plancher (2₂), avant (2₃), arrière (2₄) comportent le long de leurs bords longitudinaux (2₁a, 2₂a, 2₃a , 2₄b) et d'un de leurs bords transversaux (2₁b, 2₂b, 2₃b , 2₄c) une gorge continue (2₁c, 2₂c, 2₃c , 2₄d) orientée à angle droit vers l'intérieur de la cellule (2) et pour chacune de ces parois, sont encastrés dans cette gorge, le bord transversal exempt de gorge (2₁d, 2₂d, 2₃d , 2₄e) de la paroi adjacente et un des bords desdites parois latérales (2₅, 2₆).

2. Carrosserie selon la revendication 1 caractérisée en ce que les parois de pavillon (2₁) et de plancher (2₂) sont symétriques par rapport à un axe (xx₁) perpendiculaire auxdites parois et passant par le centre de la cellule (2).

3. Carrosserie selon la revendication 1 caractérisée en ce que les parois avant (2₃) et arrière (2₄) sont symétriques par rapport à un axe (yy₁) perpendiculaire auxdites parois et passant par le centre de la cellule (2).

4. Carrosserie selon l'une quelconque des revendications 1 à 3 caractérisée en ce que lesdites gorges (2₁c, 2₂c, 2₃c , 2₄d) sont d'une section droite rectangulaire et comportent chacune deux lèvres de recouvrement (2₁c₁, 2₂c₂...) formant des couvre-joints, lesquelles lèvres sont parallèles entre elles et perpendiculaires à la paroi (2₁, 2₂, 2₃ , 2₄).

5. Carrosserie selon la revendication 4 caractérisée en ce que la gorge (2₁c, 2₂c, 2₃c , 2₄d) de chacune desdites parois s'étend parallèlement à ses bords longitudinaux (2₁a, 2₂a, 2₃a , 2₄b) et transversal (2₁d, 2₂d, 2₃d , 2₄e) et en ce que la lèvre externe (2₁c₁, 2₂c₂...) de la gorge prolonge la face externe du bord (2₁a, 2₂a, 2₃a , 2₄b) de la paroi.

6. Carrosserie selon l'une quelconque des revendications 4 et 5 caractérisée en ce que le bord des parois exempt de gorge (2₁d, 2₂d, 2₃d , 2₄e) est sensiblement au contact du fond de la gorge (2₁c, 2₂c, 2₃c, 2₄d), en ce que lesdites lèvres (2₁c₁, 2₂c₂...) encadrent étroitement ledit bord et que la liaison de parois (2₁, 2₂, 2₃ , 2₄, 2₅, 2₆) entre elles est réalisé par polymérisation d'une résine synthétique insérée entre la gorge et la partie des parois encastrée dans celle-ci.

7. Procédé de fabrication d'une carrosserie isotherme selon l'une quelconque des revendications 1 à 6 caractérisé par les opérations suivantes :
- on réalise par moulage les parois de pavillon (2₁) et de plancher (2₂) identiques, on procède de même pour les parois avant (2₃) et arrière (2₄) ;
- on réalise les deux parois latérales (2₅, 2₆) de la cellule ;
- on prévoit avant le moulage des réservations dans les moules afin d'obtenir notamment dans la paroi arrière (2₄) une ouverture de porte (2₄a) ;
- on assemble ensuite lesdites parois pour former une cellule parallélépipédique (2) et en cours d'assemblage :
- on dispose les parois de pavillon (2₁) et de plancher (2₂) de façon symétrique par rapport audit axe (xx₁) de telle sorte que les bords exempts de gorge (2₁d, 2₂d, 2₃d , 2₄e) desdites parois soient en opposition, et on procède de même pour les parois avant (2₃) et arrière (2₄) par rapport audit axe (yy₁) ;
- on présente les parois latérales (2₅, 2₆) de telle sorte que leurs bords périphériques soient en regard des gorges (2₁c, 2₂c, 2₃c, 2₄d) desdites parois dont les bords exempts de gorge (2₁d, 2₂d, 2₃d , 2₄e) sont mis en regard des gorges des parois adjacentes et on assemble lesdites parois par encastrement de leurs bords dans lesdites gorges et on les solidarise par polymérisation d'une résine synthétique dans le but d'obtenir une cellule monobloc.

## Claims

1. Thermal-insulating bodywork to equip a commercial vehicle or a refrigerated trailer, which bodywork comprises a roof wall (2₁), a floor wall (2₂), a front wall (2₃), a back wall (2₄) and two side walls (2₅, 2₆), said walls being rectangular to constitute together a parallelepipedal cell (2) whose back wall (2₄) and/or at least one of the side walls (2₅, 2₆) of which comprises a door opening, characterized in that said roof wall (2₁), floor wall (2₂), front wall (2₃), back wall (2₄) comprise along their longitudinal edges (2₁a, 2₂a, 2₃a, 2₄b) and along one of their transversal edges (2₁b, 2₂b, 2₃b, 24c) a continuous groove (2₁c, 2₂c, 2₃c, 2₄d) oriented at right angle towards the inside of the cell (2) and in that for each one of said walls, the grooveless transversal edge (2₁d, 2₂d, 2₃d, 2₄e) of the adjacent wall and one of the edges of said side walls (2₅, 2₆) are embedded in said groove.

2. Bodywork according to claim 1, characterized in that the roof wall (2₁) and floor wall (2₂) are symmetrical with respect to an axis (xx₁) perpendicular to said walls and passing through the center of the cell (2).

3. Bodywork according to claim 1, characterized in that the front wall (2₃) and rear wall (2₄) are symmetrical with respect to an axis (yy₁) perpendicular to said walls and passing through the center of the cell (2).

4. Bodywork according to any one of claims 1 to 3, characterized in that said grooves (2₁c, 2₂c, 2₃c, 2₄d) have a rectangular cross-section, each groove comprising two overlapping lips (2₁c₁, 2₂c₂ .....) forming cover plates, which lips are parallel together and perpendicular to the wall (2₁, 2₂, 2₃, 2₄).

5. Bodywork according to claim 4, characterized in that the groove (2₁c, 2₂c, 2₃c, 2₄d) of each one of said walls extends in parallel to its longitudinal (2₁a, 2₂a, 2₃a, 2₄b) and transversal edges (2₁d, 2₂d, 2₃d, 2₄e) and in that the external lip (2₁c₁, 2₂c₂ .....) of the groove extends from the external face of the edge (2₁a, 2₂a, 2₃a, 2₄b) of the wall.

6. Bodywork according to any one of claims 4 and 5, characterized in that the edge of the walls which have no groove (2₁d, 2₂d, 2₃d, 2₄e) is substantially in contact with the bottom of the groove (2₁c, 2₂c, 2₃e, 2₄d), in that said lips (2₁c₁, 2₂c₂ .....) tightly frame said edge and that the interconnection of the walls (2₁, 2₂, 2₃, 2₄, 2₅, 2₆) is achieved by polymerization of a synthetic resin inserted between the groove and the part of the walls inserted therein.

7. Method for the production of a thermal-insulating bodywork according to any one of claims 1 to 6, characterized by the steps of:
- producing by molding the identical roof (2₁) and floor (2₂) walls, proceeding in the same way for the front (2₃) and back (2₄) walls;
- producing the two side walls (2₅, 2₆) of the cell;
- providing, before molding, spaces in the molds with a view to obtaining, particularly in the rear wall (2₄) a door aperture (2₄a);
- then assembling said walls so as to form a parallelepipedal cell (2), and during assembly:
- disposing the roof (2₁) and floor (2₂) walls, symmetrically with respect to said axis (xx₁), such that the grooveless edges (2₁d, 2₂d, 2₃d, 2₄e) of said walls are in facing relationship, and proceeding in the same way for the front (2₃) and back (2₄) walls with respect to said axis (yy₁);
- presenting the side walls (2₅, 2₆) in such a way that their peripheral edges are in facing relationship to the grooves (2₁c, 2₂c, 2₃c, 2₄d) of said walls whose grooveless edges (2₁d, 2₂d, 2₃d, 2₄e) are placed in facing relationship with the grooves of the adjacent walls and assembling said walls by force-fitting their edges into said grooves and fixing them by polymerization of a synthetic resin in order to obtain a monobloc cell.

## Patentansprüche

1. Thermisch isolierender Aufbau für ein Kühlfahrzeug oder einen Kühlanhänger, mit einer Deckenwand (2₁), einer Bodenwand (2₂), einer Vorderwand (2₃), einer Hinterwand (2₄) und zwei Seitenwänden (2₅, 2₆), die rechteckig sind und zusammen eine quaderförmige Zelle (2) bilden, deren Hinterwand (2₄) und/oder wenigstens eine der Seitenwände (2₅, 2₆) eine Türöffnung aufweist,
dadurch **gekennzeichnet**, daß
die Deckenwand (2₁), die Bodenwand (2₂), die Vorderwand (2₃) und die Hinterwand (2₄) entlang ihrer Längskanten (2₁a, 2₂a, 2₃a, 2₄b) und entlang einer ihrer Querkanten (2₁b, 2₂b, 2₃b, 2₄c) eine durchgehende, in rechtem Winkel zum Inneren der Zelle (2) hin orientierte Nut (2₁c, 2₂c, 2₃c, 2₄d) aufweisen, und daß an jeder dieser Wände in diese Nut die nutlose Querkante (2₁d, 2₂d, 2₃d, 2₄e) der angrenzenden Wand und eine der Kanten der Seitenwände (2₅, 2₆) eingesteckt sind.

2. Aufbau nach Anspruch 1,
dadurch gekennzeichnet, daß
die Deckenwand (2₁) und die Bodenwand (2₂) bezüglich einer zu diesen Wänden senkrechten, durch den Mittelpunkt der Zelle (2) verlaufenden Achse (xx₁) symmetrisch sind.

3. Aufbau nach Anspruch 1,
dadurch gekennzeichnet, daß
die Vorderwand (2₃) und Hinterwand (2₄) bezüglich einer zu diesen Wänden senkrechten und durch den Mittelpunkt der Zelle (2) verlaufenden Achse (yy₁) symmetrisch sind.

4. Aufbau nach einem der Ansprüche 1 bis 3,
dadurch gekennzeichnet, daß
die Nuten (2₁c, 2₂c, 2₃c, 2₄d) einen rechteckigen Querschnitt haben und jeweils zwei Abdecklippen (2₁c₁, 2₂c₂, ...) aufweisen, die Fugenabdeckungen bilden, wobei die Lippen zueinander parallel und zur Wand (2₁, 2₂, 2₃, 2₄) senkrecht sind.

5. Aufbau nach Anspruch 4,
dadurch gekennzeichnet, daß
die Nut (2₁c, 2₂c, 2₃c, 2₄d) einer jeden der Wände parallel zu deren Längskanten (2₁a, 2₂a, 2₃a, 2₄b) und Querkanten (2₁d, 2₂d, 2₃d, 2₄e) verläuft und daß die äußere Lippe (2₁c₁, 2₂c₂, ...) der Nut die Außenseite der Kante (2₁a, 2₂a, 2₃a, 2₄b) der Wand verlängert.

6. Aufbau nach Anspruch 4 oder 5,
dadurch gekennzeichnet, daß
die nutlose Kante (2₁d, 2₂d, 2₃d, 2₄e) der Wände im wesentlichen in Kontakt mit dem Boden der Nut (2₁c, 2₂c, 2₃c, 2₄d) ist, daß die Lippen (2₁c₁, 2₂c₂ ...) diese Kante eng umfassen und daß die Verbindung der Wände (2₁, 2₂, 2₃, 2₄, 2₅, 2₆) untereinander durch die Polymerisierung eines Kunstharzes hergestellt ist, das zwischen die Nut und den darin eingesteckten Bereich der Wände eingefügt ist.

7. Verfahren zur Herstellung eines thermisch isolierenden Aufbaus nach einem der Ansprüche 1 bis 6,
gekennzeichnet durch die Schritte:
- Herstellen der Deckenwand (2₁) und der dazu identischen Bodenwand (2₂) durch Formung, gleiches Verfahren für die Vorderwand (2₃) und die Hinterwand (2₄);
- Herstellen der zwei Seitenwände (2₅, 2₆) der Zelle;
- Vorsehen von Reservierungen in den Formen vor der Formung, um insbesondere in der Rückwand (2₄) eine Türoffnung (2₄a) zu erhalten;
- anschließend Zusammensetzen der Wände, um eine quaderförmige Zelle (2) zu bilden, und während des Zusammensetzens:
- Anordnen der Deckenwand (2₁) und der Bodenwand (2₂) symmetrisch bezüglich der Achse (xx₁), so daß die nutlosen Kanten (2₁d, 2₂d, 2₃d, 2₄e) der Wände einander gegenüberstehen, gleiches Verfahren für die Vorderwand (2₃) und die Rückwand (2₄) bezüglich der Achse (yy₁);
- Darbieten der Seitenwände (2₅, 2₆), so daß ihre Außenkanten den Nuten (2₁c, 2₂c, 2₃c, 2₄d) der Wände liegen, deren nutlose Kanten (2₁d, 2₂d, 2₃d, 2₄e) gegenüber den Nuten der angrenzenden Wände angeordnet werden und Zusammensetzen der Wände durch Einstecken ihrer Kanten in die Nuten und Verbinden der Wände durch Polymerisierung eines Kunstharzes, um eine einteilige Zelle zu erhalten.
